# FASCICULE DE BREVET EUROPEEN

(11) **EP 4 116 034 B1**
(45) Date de publication et mention de la délivrance du brevet: **01.05.2024**
(21) Numéro de dépôt: 22182819.7
(22) Date de dépôt: 04.07.2022
(51) Int. Cl.: B23Q 11/00

(54) **DISPOSITIF DE COUPE EQUIPE D'UNE BUSE D'ASPIRATION**
SCHNEIDVORRICHTUNG MIT SAUGDÜSE
CUTTING DEVICE EQUIPPED WITH A SUCTION NOZZLE

(30) Priorité: 08.07.2021 FR 2107397
(43) Date de publication de la demande: 11.01.2023
(73) Titulaire: Airbus Operations SAS, 31060 Toulouse (FR)
(72) Inventeur: CROUZY, Pierre, 31060 TOULOUSE (FR); NICOLOSO, Pierre, 31060 TOULOUSE (FR)
(74) Mandataire: Cabinet Le Guen Maillet

(56) Documents cités:
- DE-A1-102006 012 291
- FR-A1- 3 004 667
- US-A1- 2007 193 759
- US-A1- 2021 069 844

## Description

### DOMAINE TECHNIQUE

Au moins un mode de réalisation concerne un dispositif de coupe équipé d'une tête comprenant une base destinée à être fixée sur une machine-outil et une buse d'aspiration cylindrique solidaire de la base.

### ETAT DE LA TECHNIQUE ANTERIEURE

Dans le domaine de l'aéronautique, il est connu d'utiliser des dispositifs de coupe, e.g. de perçage ou de fraisage (« milling machine » en anglais), afin de pouvoir percer des parties de l'avion telles que des pylônes. Le perçage d'un pylône, lequel est généralement en titane, produit des copeaux de titane. Afin de les évacuer, le dispositif de coupe est équipé d'une tête couvrant l'outil de coupe, e.g. un foret. La tête comprend une base solidaire d'une buse d'aspiration. Elle comprend également un connecteur sur lequel un tuyau d'aspiration relié à un aspirateur peut être branché. FR 3 004 667 A1 décrit un dispositif de coupe selon le préambule de la revendication 1.

Afin d'éviter une montée en température dans la zone de coupe à l'intérieur de la tête, la buse d'aspiration est généralement percée de petits trous circulaires afin d'assurer un apport en air suffisant et ainsi évacuer la chaleur produite lors de la découpe.

Toutefois, avec des matériaux réfractaires tels que le titane, cet apport en air est insuffisant. Ainsi, un départ de feu risque de se produire dans la zone de coupe. Par exemple, des copeaux incandescents risquent d'être aspirés et de mettre le feu à la tuyauterie d'aspiration ou même à l'aspirateur.

Il est souhaitable de pallier ces différents inconvénients de l'état de la technique. Il est notamment souhaitable de proposer un dispositif de coupe qui limite les risques de départ de feu et le cas échéant détecte un départ de feu.

### EXPOSE DE L'INVENTION

L'invention est définie à la revendication 1.

Dans un mode de réalisation, la buse d'aspiration est percée de trous circulaires le long du bord d'une extrémité destinée à être plaquée contre une pièce à découper.

Dans un mode de réalisation, ledit au moins un trou oblong est formé de deux arcs de cercle reliés par des lignes droites longitudinales, chaque cercle étant de diamètre de 12 mm et la distance entre les centres des cercles étant de 10 mm.

Dans un mode de réalisation, ladite buse d'aspiration et ledit outil de coupe sont coaxiaux. Dans un mode de réalisation, le dispositif de coupe comprend également au moins un capteur infrarouge fixé dans un trou formé dans la paroi de ladite tête et débouchant sur une zone de coupe à l'intérieur de ladite tête, ledit capteur infrarouge étant relié à un module de détection de départ de feu.

Un système comprenant un dispositif de coupe selon l'un des modes de réalisation précédent est également décrit. Le système comprend en outre un module de commande configuré pour sécuriser ledit dispositif de coupe en cas de détection d'un départ de feu par ledit module de détection, ledit module de détection de départ de feu et ledit module de commande étant reliés par communication sans fil.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre un dispositif de coupe dans lequel la présente invention peut être mise en oeuvre ;
[Fig. 2] illustre schématiquement une tête du dispositif de coupe selon un mode particulier de réalisation ;
[Fig. 3] illustre schématiquement une vue latérale d'une buse d'aspiration appartenant à la tête du dispositif de coupe selon un mode particulier de réalisation ;
[Fig. 4] illustre schématiquement une vue en coupe de la tête du dispositif de coupe selon un mode particulier de réalisation ; et,
[Fig. 5] représente l'architecture matérielle d'un module de détection selon un mode particulier de réalisation.

### EXPOSE DETAILLE DE MODES DE REALISATION

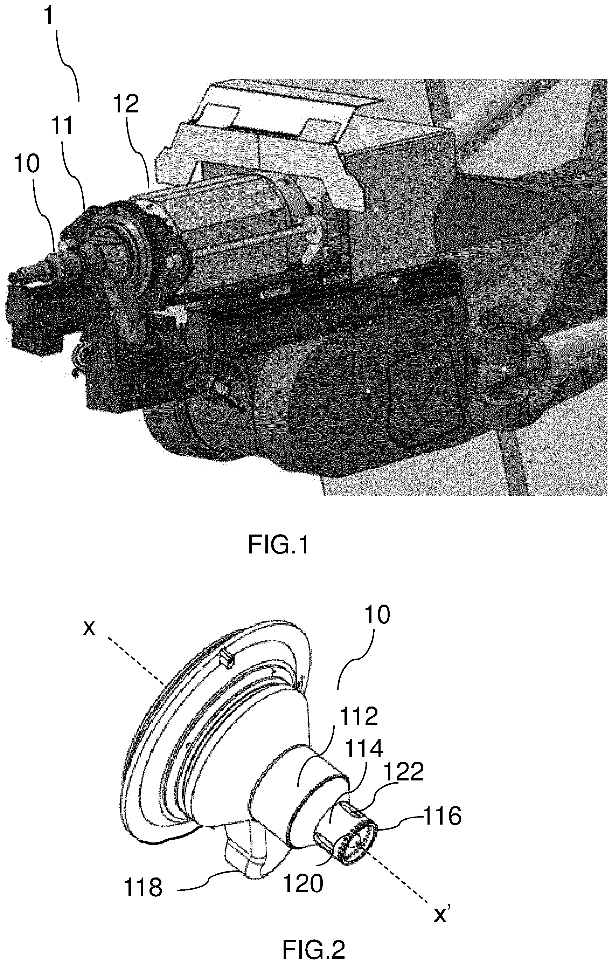

La Fig. 1 illustre un dispositif de coupe 1, par exemple un dispositif de perçage ou de fraisage, dans lequel la présente invention peut être mise en oeuvre. Le dispositif de coupe 1 comprend une tête 10 montée sur un socle 11 d'une machine-outil 12. La tête 10 recouvre un outil de coupe (« cutting tool » en anglais) non visible sur la Fig. 1, e.g. un foret ou une mèche, fixé sur un système d'entraînement. Dit autrement, l'outil de coupe se trouve dans la cavité intérieure, appelée zone de coupe, de la tête 10. Le système d'entraînement est configuré pour entraîner ledit outil de coupe en rotation autour de son axe et en translation parallèlement audit axe de rotation en vue d'une découpe, e.g. perçage, fraisage.

La Fig. 2 illustre schématiquement la tête 10 du dispositif de coupe 1 selon un mode particulier de réalisation. La tête 10 comprend une base 112 et une buse d'aspiration 114 (« nozzle » en anglais) de forme cylindrique solidaire de la base 112. Une des extrémités 116 de la buse d'aspiration 114 est destinée à être plaquée contre la surface d'une pièce à découper de sorte que les copeaux produits lors de la découpe de la pièce soient aspirés par la buse d'aspiration 114.

La tête 10 comprend, en outre, un connecteur 118 solidaire de la base 112 et destiné à recevoir un tuyau d'aspiration (non représenté sur la Fig. 2). Le tuyau d'aspiration est destiné à être relié à un aspirateur. Ainsi, les copeaux produits lors de la découpe sont aspirés par la buse d'aspiration 114 puis éjectés par le connecteur 118 dans le tuyau d'aspiration.

Sur la Fig. 2, la buse d'aspiration 114 qui est de forme cylindrique est percée de trous traversants. Elle est notamment percée de trous circulaires 120 traversant la paroi de la buse d'aspiration 114. Ces trous circulaires 120 sont disposés le long du bord de l'extrémité 116 destinée à être plaquée contre la surface de la pièce à découper. Avantageusement, la buse d'aspiration 114 est également percée d'au moins un trou oblong 122 traversant qui est parallèle à l'axe principal XX' de la buse d'aspiration 114. Dans un mode particulier de réalisation, la buse d'aspiration 114 est percée de trois trous oblongs.

Dans un autre mode de réalisation (non représenté), la buse d'aspiration 114 est percée uniquement d'un ou de plusieurs trous oblongs 122, i.e. les trous circulaires 120 sont absents.

L'ajout d'un ou de plusieurs trous oblongs permet d'augmenter l'apport en air frais dans la zone de coupe et ainsi éviter une montée en température dans cette zone. Par ailleurs, cet apport supplémentaire d'air permet une évacuation plus rapide des copeaux depuis la zone de coupe vers l'aspirateur par augmentation du débit d'air au niveau de la zone de coupe. Le risque de voir des copeaux se coller sur les parois de la tête 10 est ainsi diminué. En outre, les trous oblongs grâce à leur forme particulière et leur orientation parallèle à l'axe principal XX' permettent également une fragmentation des copeaux qui, lorsqu'ils sont aspirés par la buse d'aspiration 114, viennent taper contre les bords des trous oblongs et ainsi se fragmenter. La fragmentation des copeaux permet également de diminuer le risque de départ de feu et d'améliorer la qualité de la découpe. En effet, les copeaux étant plus petits ils s'évacuent mieux. Le risque d'accumulation en masse de copeaux dans la zone de coupe est diminué ce qui réduit également le risque de départ de feu notamment dans le cas où un copeau chaud doit être évacué. Par ailleurs, les copeaux étant plus petits, le risque qu'ils s'enroulent autour de l'outil de coupe est également diminué. Ceci est particulièrement avantageux car une accumulation de copeaux autour de l'outil de coupe peut dégrader la qualité de la découpe en abîmant les bords de la découpe ainsi qu'en abîmant le foret. En effet, le foret est généralement en carbure lequel est lié dans sa structure par du cobalt. Il convient donc de limiter la chaleur afin de ne pas dégrader le carbure.

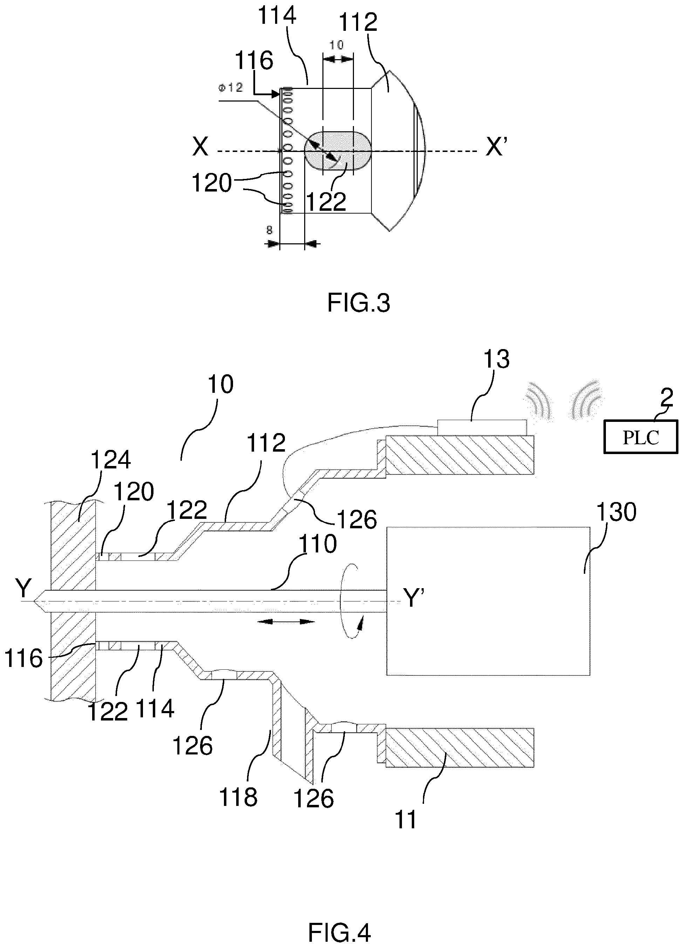

La Fig. 3 illustre schématiquement une vue latérale de la buse d'aspiration 114 selon un mode particulier de réalisation. La paroi de la buse d'aspiration 114 est percée de trous circulaires 120 traversants disposés le long du bord de l'extrémité 116 destinée à être plaquée contre la surface de la pièce à découper. Classiquement, les trous circulaires 120 sont de 2 à 3 mm de diamètre. Dans une variante de réalisation, les trous circulaires 120 sont absents. La buse d'aspiration 114 est également percée d'au moins un trou oblong 122 traversant qui est parallèle à son axe principal XX' .

Dans un mode particulier de réalisation, les trous oblongs 122 sont formés de deux arcs de cercle reliés par des lignes droites longitudinales, chaque cercle étant de diamètre de 12 mm et la distance entre les centres des cercles étant de 10 mm. Sur la Fig. 3, le trou oblong 122 est à 8 mm du bord de l'extrémité 116. Plus généralement, les trous oblongs sont calibrés de sorte qu'il y ait plus d'air à entrer dans la buse d'aspiration 114 que d'air à sortir par le tuyau d'aspiration. Ainsi, les copeaux sont évacués plus rapidement dans le tuyau d'aspiration connecté au connecteur 118. Autrement dit, ils sont calibrés de sorte que le débit d'air dans la zone de coupe soit supérieur au débit d'air d'aspiration.

La Fig. 4 illustre schématiquement une vue en coupe de la tête 10 du dispositif de coupe 1 selon un mode particulier de réalisation.

Les éléments identiques aux éléments représentés sur les Figs 1 à 3 sont identifiés sur la Fig. 4 avec les mêmes références numériques. La base 112 de la tête 10 est fixée sur le socle 11 du dispositif de coupe 1. Le dispositif de coupe 1 comprend un système d'entraînement 130 sur lequel est fixé un outil de coupe 110. Le système d'entraînement 130 est configuré pour entraîner ledit outil de coupe 110 en rotation autour de son axe YY' et en translation parallèlement audit axe de rotation de sorte que l'outil de coupe 110 puisse sortir de la buse d'aspiration 114 lors de la découpe afin par exemple de percer la pièce 124 en contact avec l'extrémité 116. Préférentiellement, l'outil de coupe 110 et la buse d'aspiration 114 sont coaxiaux, i.e. les axes XX' et YY' sont confondus.

La paroi de buse d'aspiration 114 est optionnellement percée de trous circulaires 120 traversants et d'au moins un trou oblong 122 traversant. Dans une variante non représentée, les trous circulaires 120 sont absents et la buse d'aspiration 114 ne comprend qu'un ou des trous oblongs 122.

Dans un mode de réalisation particulier, la paroi de la tête 10 comprend en outre au moins un capteur infrarouge 126. Le capteur infrarouge 126 est positionné, au niveau de la base 112 ou de la buse d'aspiration 114, soit dans un trou traversant la paroi de la tête, soit dans un trou borgne débouchant sur la zone de coupe de sorte que le capteur infrarouge ait une vue directe sur la zone de coupe. Le capteur infrarouge 126 est configuré pour capter un rayonnement infrarouge et peut ainsi détecter un départ de feu (e.g. une étincelle) se produisant dans la zone de coupe. En effet, le capteur infrarouge 126 est sensible aux radiations infrarouges émises par une étincelle ou une flamme. Un ou des capteurs infrarouge 126 peuvent optionnellement être fixés dans la paroi du connecteur 118.

Le ou les capteurs infrarouge 126 sont reliés de manière filaire à un module de détection de départ de feu 13 alimenté par une batterie. Dans un mode de réalisation, le niveau de charge de la batterie est surveillé pour remonter une alarme à un module de commande 2 en cas de niveau de charge bas, e.g. inférieur à une valeur de seuil. Ainsi, on s'assure que le module de détection est actif grâce à une batterie chargée. Le module de détection 13 peut être fixé sur le dispositif de coupe 1 ou bien posé à côté de celui-ci. Ainsi, lorsqu'un capteur infrarouge 126 capte un rayonnement infrarouge, il envoie un signal électrique via le lien filaire au module de détection 13. Sur la Fig. 4, seul un lien filaire est représenté pour éviter de surcharger la figure. Toutefois, tous les capteurs infrarouge 126 sont reliés au module de détection 13. Ainsi, en cas de départ de feu ou même en cas d'étincelle dans la zone de coupe, le capteur infrarouge 126 détecte la radiation infrarouge et envoie un signal analogique par le lien filaire au module de détection 13. Le signal analogique est comparé à un seuil de détection réglable sur le module de détection 13. La comparaison à un seuil de détection permet d'éviter d'indiquer un départ de feu en cas d'un rayonnement infrarouge de très faible amplitude. Dans un mode particulier de réalisation, le module de détection 13 comprend un multiplexeur qui, à partir de différents signaux analogiques reçus des différents capteurs infrarouge 126 et seuillés par le module de détection 13, génère une trame de communication sans fil RF (acronyme de radio-fréquences) qui est transmise à un module de commande 2 associé au dispositif de coupe 1 pour lui indiquer qu'un départ de feu a été détecté. Le multiplexage permet donc à partir des signaux analogiques seuillés d'envoyer un signal binaire au module de commande 2 pour lui indiquer la détection ou non d'un départ de feu dans la zone de coupe. Par exemple, si au moins un des capteurs infrarouge 126 envoie un signal analogique qui est supérieur au seuil de détection, alors la trame RF comprend une information indiquant au module de commande 2 la détection d'un départ de feu dans la zone de coupe.

Dans un mode de réalisation particulier, le module de commande 2 est en liaison sans fil avec une pluralité de modules de détection 13, chaque module de détection 13 étant associé à un dispositif de coupe 1 particulier. Chaque module de détection 13 est ainsi appairé au module de commande 2 et définit ainsi une ligne de détection. Il y a donc autant de lignes de détection que de modules de détection 13 appairés au module de commande 2. C'est pourquoi, un identifiant est envoyé au début de chaque trame de communication sans fil RF pour identifier la ligne de détection concernée, i.e. le module de détection 13 ayant envoyé ladite trame.

Dans un autre mode de réalisation, le module de commande 2 est en liaison sans fil avec un unique module de détection 13. Dans ce cas particulier, aucun identifiant n'a besoin d'être envoyé au début de chaque trame de communication sans fil RF.

Le module de commande 2 est par exemple un automate programmable industriel ou PLC en anglais (acronyme de « programmable logic controller »), i.e. un dispositif électronique numérique programmable destiné à la commande de processus industriels. Le module de détection 13 et le module de commande 2 opèrent par exemple dans la bande fréquentielle ISM (acronyme de « Industriel, Scientifique et Médical ») de 433 MHz ou dans la bande fréquentielle FCC (acronyme de Fédéral Communications Commission), qui va approximativement de 150 kHz à 480 kHz. Par ailleurs, une modulation FSK (acronyme de Frequency-Shift Keying) est par exemple utilisée.

Le module de détection 13 envoie donc un signal binaire au module de commande 2 afin de lui indiquer si oui ou non un départ de feu a été détecté dans la zone de coupe. Si un départ de feu a été détecté, le module de commande 2 est informé. Le module de commande 2 récupère la trame de communication sans fil RF et la transforme en un signal numérique binaire en sortie (0 ou 1) pour chaque ligne de détection, i.e. pour chaque module de détection 13 avec lequel le module de commande 2 est appairé, et ainsi sécuriser le dispositif de coupe 1 associé audit module de détection 13. Si la sortie a la valeur 0 alors aucun départ de feu n'a été détecté pour cette ligne de détection et si la sortie est à 1 alors un départ de feu a été détecté. Il peut alors prendre certaines décisions dans le cas où un départ de feu a été détecté et notamment sécuriser le dispositif de coupe 1. A cet effet, il peut par exemple, stopper la découpe, couper l'aspiration en utilisant par exemple des vannes guillotines, couper la lubrification et/ou émettre un signal d'alerte visuel et/ou auditif, par exemple au moyen d'un gyrophare et/ou une sirène. Le temps de réaction d'un tel système est très rapide de l'ordre de 60 ms entre la détection d'un départ de feu dans la zone de coupe et la prise de décision du module de commande 2.

Le dispositif de coupe 1, le module de détection 13 et le module de commande 2 configuré pour sécuriser ledit dispositif de coupe 1 en cas de détection d'un départ de feu par le module de détection (13) forment un système.

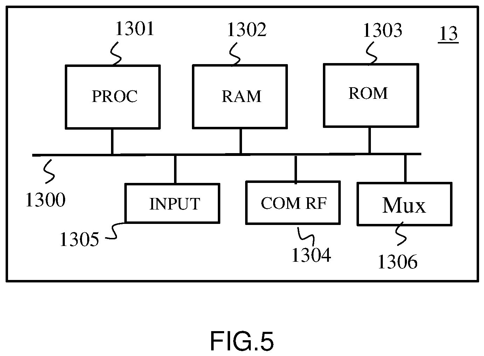

La Fig.5 représente l'architecture matérielle du module de détection 13. Selon l'exemple d'architecture matérielle représenté à la Fig. 5, le module de détection 13 comprend alors, reliés par un bus de communication 1300 : un processeur ou CPU (« Central Processing Unit » en anglais) 1301 ; une mémoire vive RAM (« Random Access Memory » en anglais) 1302 ; une mémoire morte ROM (« Read Only Memory » en anglais) 1303 ; au moins une interface de communication radio fréquence 1304 permettant au module de détection 13 d'envoyer ou de recevoir des informations ; une interface d'entrée analogique 1305 munie d'un convertisseur analogique-numérique ADC (acronyme anglais de « Analog to Digital Converter ») pour récupérer l'état des signaux d'entrée. L'interface de communication radio fréquence 1305 est par exemple compatible avec le protocole RF FSK 433 MHz. Optionnellement, le module de détection 13 comprend un multiplexeur 1306 configuré pour générer une trame de communication sans fil RF à partir de différents signaux analogiques reçus de différents capteurs infrarouge 126 et seuillés. Le multiplexeur 1306 peut être intégré au CPU 1301 ou être un élément séparé relié au CPU 1301.

Le processeur 1301 est capable d'exécuter des instructions chargées dans la RAM 1302 à partir de la ROM 1303, ou provenant d'un réseau de communication quand l'état des signaux analogiques d'entrée change. Lorsque le module de détection 13 est mis sous tension, le processeur 1301 est capable de lire de la RAM 1302 des instructions et de les exécuter. Notamment, le module de détection 13 est configuré pour comparer les signaux analogiques d'entrée au seuil de détection réglable et pour générer la trame RF qui est transmise au module de commande 2.

## Revendications

1. Un dispositif de coupe (1) comprenant une tête (10), ladite tête (10) comprenant :
- une base (112) destinée à être fixée sur une machine-outil ;
- une buse d'aspiration cylindrique (114) solidaire de la base (112) ;
- un connecteur (118) solidaire de la tête (10) et destiné à recevoir un tuyau d'aspiration ; dans laquelle ladite buse d'aspiration (114) est percée d'au moins un trou oblong (122) parallèle à un axe de ladite buse d'aspiration (114), le dispositif de coupe (1) comprenant en outre :
- un socle (11) sur lequel est fixée ladite tête (10) ;
- un système d'entraînement (130) dans lequel est fixé un outil de coupe (110), ledit système d'entraînement (130) étant configuré pour entraîner ledit outil de coupe (110) en rotation autour de son axe (YY') et en translation parallèlement audit axe (YY') ; et **caractérisé par**
- au moins un capteur infrarouge (126) fixé dans un trou formé dans la paroi de ladite tête (10) et débouchant sur une zone de coupe à l'intérieur de ladite tête (10), ledit capteur infrarouge (126) étant relié à un module de détection (13) de départ de feu.

2. Le dispositif de coupe (1) selon la revendication 1, dans lequel la buse d'aspiration (114) est percée de trous circulaires (120) le long du bord d'une extrémité (116) destinée à être plaquée contre une pièce (124) à découper.

3. Le dispositif de coupe (1) selon l'une des revendications 1 à 2, dans lequel ledit au moins un trou oblong (122) est formé de deux arcs de cercle reliés par des lignes droites longitudinales, chaque cercle étant de diamètre de 12 mm et la distance entre les centres des cercles étant de 10 mm.

4. Le dispositif de coupe (1) selon l'une des revendications 1 à 3, dans lequel ladite buse d'aspiration (114) et ledit outil de coupe (110) sont coaxiaux.

5. Un système comprenant un dispositif de coupe (1) selon l'une des revendications revendication 1 à 4 et un module de commande (2) configuré pour sécuriser ledit dispositif de coupe (1) en cas de détection d'un départ de feu par ledit module de détection (13), ledit module de détection (13) de départ de feu et ledit module de commande (2) étant reliés par communication sans fil.

## Patentansprüche

1. Schneidvorrichtung (1), die einen Kopf (10) beinhaltet, wobei der Kopf (10) Folgendes beinhaltet:
- eine Basis (112), die dazu bestimmt ist, an einer Werkzeugmaschine befestigt zu werden;
□ eine zylindrische Saugdüse (114), die mit der Basis (112) fest verbunden ist;
- ein Verbindungselement (118), das mit dem Kopf (10) fest verbunden ist und dazu bestimmt ist, ein Saugrohr aufzunehmen; wobei die Saugdüse (114) von mindestens einem Langloch (122) parallel zu einer Achse der Saugdüse (114) durchquert wird, wobei die Schneidvorrichtung (1) ferner Folgendes beinhaltet:
- einen Sockel (11), an dem der Kopf (10) befestigt ist;
- ein Antriebssystem (130), in dem ein Schneidwerkzeug (110) befestigt ist, wobei das Antriebssystem (130) dazu konfiguriert ist, das Schneidwerkzeug (110) rotatorisch um seine Achse (YY') und translatorisch parallel zu der Achse (YY') anzutreiben; und **gekennzeichnet durch**:
- mindestens einen Infrarotsensor (126), der in einem Loch befestigt ist, das in der Wand des Kopfes (10) gebildet ist und in einem Schneidbereich im Inneren des Kopfes (10) mündet, wobei der Infrarotsensor (126) mit einem Brandfrüherkennungsmodul (13) verbunden ist.

2. Schneidvorrichtung (1) nach Anspruch 1, wobei die Saugdüse (114) entlang des Randes eines Endes (116), das dazu bestimmt ist, gegen ein zu schneidendes Werkstück (124) gedrückt zu werden, von kreisförmigen Löchern (120) durchquert wird.

3. Schneidvorrichtung (1) nach einem der Ansprüche 1 bis 2, wobei das mindestens eine Langloch (122) aus zwei Kreisbögen gebildet ist, die durch gerade Längslinien verbunden sind, wobei jeder Kreis einen Durchmesser von 12 mm aufweist und der Abstand zwischen den Mitten der Kreise 10 mm beträgt.

4. Schneidvorrichtung (1) nach einem der Ansprüche 1 bis 3, wobei die Saugdüse (114) und das Schneidwerkzeug (110) koaxial sind.

5. System, das eine Schneidvorrichtung (1) nach einem der Ansprüche 1 bis 4 und ein Steuermodul (2), das dazu konfiguriert ist, die Schneidvorrichtung (1) im Fall einer Brandfrüherkennung durch das Erkennungsmodul (13) zu schützen, beinhaltet, wobei das Brandfrüherkennungsmodul (13) und das Steuermodul (2) durch drahtlose Kommunikation miteinander verbunden sind.

## Claims

1. Cutting device (1) comprising a head (10), said head (10) comprising:
- a base (112) intended to be fixed to a machine tool;
- a cylindrical suction nozzle (114) integral with the base (112);
- a connector (118) integral with the head (10) and intended to receive a suction pipe; wherein said suction nozzle (114) is perforated by at least one oblong hole (122) parallel to an axis of said suction nozzle (114), the cutting device (1) also comprising:
- a mount (11) to which said head (10) is fixed;
- a drive system (130) in which a cutting tool (110) is fixed, said drive system (130) being configured to drive said cutting tool (110) in rotation about its axis (YY') and in translation parallel to said axis (YY'); and **characterized by**;
- at least one infrared sensor (126) fixed in a hole that is formed in the wall of said head (10) and opens onto a cutting zone inside said head (10), said infrared sensor (126) being connected to a module (13) for detecting an outbreak of fire.

2. Cutting device (1) according to Claim 1, wherein the suction nozzle (114) is perforated by circular holes (120) along the edge of an end (116) intended to pressed against a part (124) to be cut.

3. Cutting device (1) according to either of Claims 1 and 2, wherein said at least one oblong hole (122) is formed of two circular arcs connected by longitudinal straight lines, each circle having a diameter of 12 mm and the distance between the centres of the circles being 10 mm.

4. Cutting device (1) according to one of Claims 1 to 3, wherein said suction nozzle (114) and said cutting tool (110) are coaxial.

5. System comprising a cutting device (1) according to one of Claims 1 to 4 and a control module (2) configured to safeguard said cutting device (1) if an outbreak of fire is detected by said detection module (13), said module (13) for detecting an outbreak of fire and said control module (2) being connected by wireless communication.
